# EUROPEAN PATENT SPECIFICATION

(11) **EP 0 384 176 B1**
(45) Date of publication and mention of the grant of the patent: **13.12.1995**
(21) Application number: 90101978.6
(22) Date of filing: 01.02.1990
(51) Int. Cl.: H02G 15/192, H02G 15/18, H02G 15/10

(54) **Metallic inner enclosure for an electrical cable connection**
Metallische innere Umhüllung für eine elektrische Kabelverbindung
Enveloppe interne métallique pour une connexion de câbles électriques

(30) Priority: 22.02.1989 DE 3905441
(43) Date of publication of application: 29.08.1990
(73) Proprietor: MINNESOTA MINING AND MANUFACTURING COMPANY, St. Paul, Minnesota 55133-3427 (US)
(72) Inventor: Hellbusch, Dieter, c/o Minnesota Mining and, St.Paul, Minnesota 55133-3427 (US); Freiwald, Frank, c/o Minnesota Mining and, St.Paul, Minnesota 55133-3427 (US)
(74) Representative: Patentanwälte Hauck, Graalfs, Wehnert, Döring, Siemons

(56) References cited:
- EP-A- 0 272 806
- DE-A- 2 810 234
- DE-U- 1 850 476
- DE-U- 8 912 585
- FR-A- 1 168 267
- FR-A- 2 278 183
- GB-A- 927 101
- GB-A- 1 091 747

## Description

### Background of the Invention

### 1. Field of the Invention

The invention refers to a metallic inner enclosure for an electrical cable connection according to the preamble of patent claim 1.

### 2. Background of the Prior Art

The German patent specification DE-A-36 43 249 or the EP-A-0 272 806 discloses an inner enclosure for an electrical cable connection comprising a tubular central section surrounding the connection area and two tubular end sections which extend taperingly from the central section to shield layers of the cables. All three sections are of metallic material. One end section is introducible, with its smaller end ahead, through the other end of the central section into the central section, a first mechanical plug connection being provided at the larger end of the one end section effective in the direction of introduction. At the larger end of the other end part and at the other end of the central section, a second mechanical plug connection is provided. By this, the complete enclosure is installed by an axial interplugging of only three structural parts. Since with the manufacturing of the parts tolerances cannot be avoided, the danger exists that the plug connections are not tight enough to keep the liquid insulation mass enclosed. Further, the known enclosure requires a so-called parking position during the insulation work. The enclosure parts are to be pushed onto one of the cables to be connected before the conductors are interconnected. Therefore, sufficient space must be available in the manhole.

From the German patent specification DE-A-31 00 221, a transition sleeve has become known for the connection of a paper-insulated cable with a plastic-insulated cable wherein a tubular portion surrounds the connection area at a radial distance. Sealing elements of metallic material are shaped as a lid or a flange wherein an outer axial flange engages the outer surface of the tubular portion while an inner axial flange through which the cable extends sealingly engages the outer conducting layer. The sealing elements are attached to the tubular portion either by a boot clamp or by soldering. Considerable difficulties are encountered to achieve a satisfactory sealing between the metallic sealing elements and the tubular portion by means of a boot clamp. On the other side, the soldering is work-expensive and necessitates educated workers. Also this known enclosure requires a parking position which the tubular portion first has to attain as long as the interconnection of the conductors is not established.

From the German patent specification DE-A-29 02 041, it has become known to provide a tubular housing with variable volume for connection sleeves of electrical cables such that the housing consists of two tubular portions of different diameter which are coaxially and overlappingly arranged. A piston-like sealing element is placed between the housing portions. Such an enclosure also necessitates educated workers for its installation and requires a relatively large manhole or ditch.

From the GB-A-1 091 747, the GB-A-927 101 or the DE-U-18 50 479 it has become known to use a tubular portion to surround the connection area of electrical cables, with the diameter of the tubular portion being larger than that of the cables. From the DE-U-18 50 476, it has been further become known to part the tubular portion in longitudinal direction. The tubular portion defines a pair of spaced longitudinal edges. Cover means co-operate with the longitudinal edges to cover and seal the space formed by the longitudinal edges. Annular sealing elements of resilient material are located between the ends of the tubular portion and the associated cables. The sealing elements hold the tubular portion at a uniform radial distance from the connection area and define a sealed cavity for receiving liquid insulation mass. The known tubular portions or sleeves are made from plastic material and are to provide a mold for the liquid insulation mass to be poured thereinto.

It is an object of the invention to provide an electrical cable connection including a metallic enclosure which serves as a mold for an insulating mass as well as a field controlling means and which can be installed by none-educated or semi-educated workers within a short time and which requires only a small manhole.

This object is attained by the features of the characterizing portion of patent claim 1.

### Summary of the Invention

Similar to the cases described above, the invention provides a tubular portion, however, this tubular portion is of metallic material. The longitudinally parted tubular portion for example consists of a suitable approximately cylindrically formed sheet, e.g. zinc or of galvanized steel sheet and can be laterally placed on the cable connection by simply moving the longitudinal edges at a seam away from each other. A parking position which is required with cylindrical enclosures is not necessary.

In the invention the sealing elements which serve as spacers for the envelope are made of elastically deformable material. By means of the longitudinal cover which engages the longitudinal edges of the tubular portion and biases the edges toward each other, the sealing elements are subjected to a radial pressure so that a sealing is effected at the ends of the tubular portion which seals prevent a leakage of impregnating liquid or insulating mass.

The cover is also made of metallic material to provide a complete screening in the area of the envelope. However, with the tubular portion according to the invention it is refrained from providing a geometrically closed screening system wherein as for example with the sleeve of the German patent specification 31 00 221 the spacer and sealing elements are made of metallic material. It has been recognized with the invention that it is sufficient for the control of the electrical field if the outer shield layer of the cable extends into the envelope. If for example a paper-insulated cable is used and the lead sheath is funnel-like or expanded at its free end as known per se and introduced into the metallic tubular portion a certain length the sealing elements must not be made electrically conductive. In connection with plastic insulated cable a conical field controlling sleeve (refractor sleeve) of semi-conductive material can be advantageously used. Such refractor sleeves are known. In the invention, the end of such sleeve having the smaller diameter can be brought into engagement with the primary insulation, and the end having the larger diameter can be brought into engagement with the screen while the center portion is brought into engagement with the semi-conductive layer. Besides its field controlling properties, such sleeve which is made of resilient material also contributes to a sealing effect.

In a presently preferred embodiment of the invention, a rail having approximately C-shape in cross section coacts with the outwardly bent longitudinal edges of the tubular portion in order to hold them against each other under tension. The rail and bent longitudinal edges can define a dove-tail connection. In case the tubular portion is relatively long, it can be advantageous if the rail consists of a plurality of separate portions, for example of two. The sealing elements preferably consist of foamed plastic which is suited to be compressed a certain amount.

The sealing elements can be provided with a radially outwardly extending portion which extends into the gap between the longitudinal edges of the tubular portion to provide a sealed connection in the area of the gap. The sealing elements are formed with a radial cut and may include locking portions adapted to engage each other to hold the ends in locking engagement. According to an embodiment of the invention, they may consist of an inner core having one or a plurality of circular recesses to receive the cables or cable conductors, around which an outer collar is wrapped. In the known structure described above (EP-A-0 272 806), the short circuit current or earth-connection is established by the enclosure. This can be critical if the engagement between the outer and the tubular center portion is only spotwise. In case of high currents, these areas are stronly heated and can even melt. Also with the structure according to the German patent specification 31 00 221, the metallic sleeve is connected to the respective cables through a screen wire connection and a ground braid, respectively. According to an embodiment of the invention, the cables are insulated by plastic material and the outer conducting layers of the cables to be interconnected are electrically interconnected by a separate braid which, additionally, can be electrically connected with the parted tubular portion for example by means of a sheet screw. The braid can be clamped by means of suitable clamping means, e.g. a constant force spring. If one of the cables to be connected is a plastic insulated cable including a wire screen, a braid can be formed of the wire if the plastic insulated cable is sufficiently shortened.

In case a three-conductor cable is to be connected with three individual cables or the like, a spacer element of electrically insulating material can be placed between the cables or the conductors, respectively. In order to achieve a stability against short circuit current forces, a spacer wrapper can be located between the cable and the parted envelope, e.g. of relatively stiff non-woven material.

### Description of the Drawings

The invention will be subsequently described in connection with the drawings.

Figure 1 is a view on a plastic insulated cable and a three conductor paper insulated cable prepared for a connection therebetween.

Figure 2 is a perspective view, partially broken of a cable connection including a tubular portion according to the invention.

Figure 3 is a front view of a sealing element for a tubular portion according to the invention.

Figure 4 is a front view of another sealing element for a tubular portion according to the invention.

Figure 5 is a cross section of figure 2 along line 5-5.

Figure 6 is a lateral view of a modified tubular portion of the invention.

Figure 7 is a partial end view of the tubular portion in Figure 6 if looking in the direction of arrow 7.

Figure 8 is a view of larger scale of one end portion of the tubular portion of Figure 6.

Figure 9 is a cross section through the end of a cable connection including an alternate embodiment of the sealing element.

Figure 10 is a perspective view of a sealing element similar to that of Figure 9.

### Detailed Description of the Invention

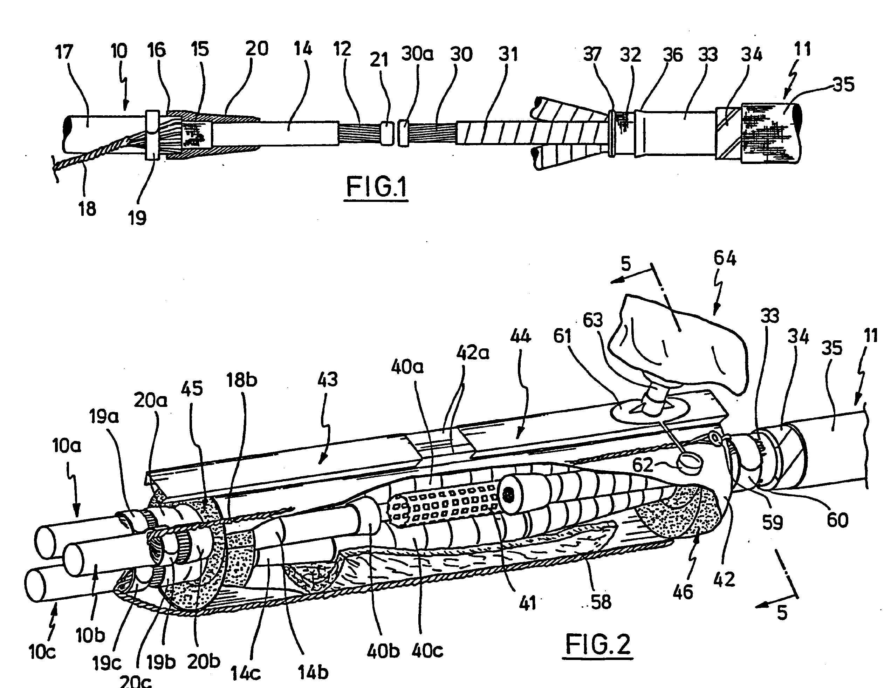

In Figure 1 a plastic insulated cable 10 and a three conductor paper insulated cable 11 can be seen. In total three plastic insulated cables are connected with the paper insulated cable 11 as illustrated in Figure 2. The cable 10 includes a conductor 12, a plastic insulation 14 on the conductor 12, an outer conducting layer 15 placed on the insulation 14, a copper wire shield or screen 16 on the outer conducting layer 15 and a cable sheath 17. With the removed cable sheath 17, the cable 10 is shortened a predetermined length so that the wires of the screen 16 extend beyond the cable end. A braid 18 is formed of the wires 16. The outer conducting layer 15 is removed a predetermined length so that the insulation 14 is exposed. The insulation 14 is removed a certain length corresponding substantially to one half of the standard crimp connector length.

As can be seen in Figure 1, the rearwardly bent wires 16 of the screen are fixed to the cable sheath 17 by means of a constant force spring 19. A refractor sleeve 20 of semiconducting field controlling material is pushed onto the cable from the free end thereof. The sleeve is conically formed, and its larger diameter end engages the cable sheath or the screen 16 thereon. The center portion of sleeve 20 engages the outer conducting layer 15 while the smaller diameter portion engages the insulation 14. A protection tape is placed on the conductor end which is removed prior to the connecting of the conductors 12, 30.

The paper insulated cable 11 includes three conductors 30, each wrapped with a paper insulation 31, a protection tape 30a being applied to the free end of the conductors 30. A so-called belt insulation 32 is wrapped around the conductors, a lead sheath 33 is around the belt insulation, and an armor 34 being wrapped around the lead sheath 33. The cable oversheath 35 is made for example of jute. The structure of cables 10 and 11 is conventional.

As can be seen, the jute oversheath 35 and the armor 34 are removed such that the armor 34 slightly extends beyond oversheath 35. The removed lead sheath 33 extends beyond armor 34. The lead sheath is funnel-like expanded at its free end as shown at 36. The removed belt insulation 32 extending beyond the lead sheath 33 is fixed by a cord 37. The paper insulation 31 is removed about one half of the standard crimp connector length as can be seen in Figure 1.

Figure 2 shows the connection of three plastic insulated cables 10a, 10b, 10c having a structure like cable 10 of Figure 1 with an oil paper insulated cable 11. The connection of the conductors is not shown since it is of conventional kind. Shrink sleeves 40a, 40b, 40c are placed on the electrical connection of the conductors in a manner as know per se. A perforated spacer tube 41 of suitable plastic material is positioned between the conductors or the shrink sleeves 40a, 40b, 40c, respectively, in order to establish a desired distance between the cables.

A tubular portion 42, preferable zinc or, alternatively, of galvanized steel sheet is wrapped around the illustrated cable connection. It is divided in longitudinal direction while the longitudinal edges 42a are bend outwardly. Two rail portions 43, 44 are U- or C-shaped in cross section and have legs inclined inwardly. The legs grip behind the bend longitudinal edges 42a of tubular portion 42 and define a dove-tail.

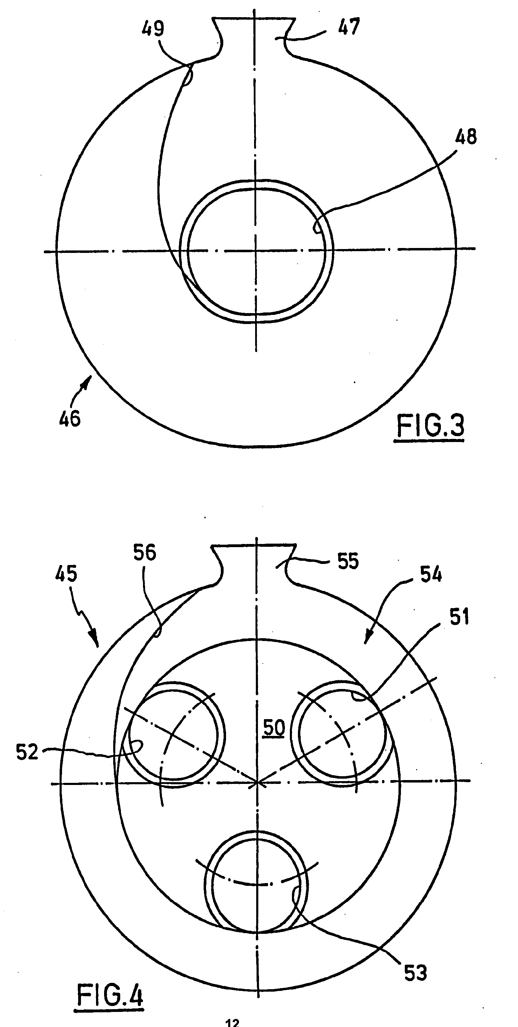

Sealing elements 45, 46 are placed on the cables 10a, 10b, 10c and the lead sheath 33 of cable 11, respectively, at the ends of tubular portion 42. The structure of the sealing elements 45, 46 can be seen in Figures 3 and 4. The sealing elements 45, 46 consist of resilient closed cellular foamed plastic material. The sealing element 46 is annular and includes a radial extension 47 dove-tailed shaped in cross section which is adapted to the cross-sectional contour of the gap defined between the outwardly bend edges 42a of tubular portion 42. The sealing element 46 has a central circular opening 48. The sealing element is also cut or split along an arcuate line 49. By this, the sealing element 46 can be opened and laid around the lead sheath 33 like a collar. The sealing element 46 is placed such that the funnel-like expansion 36 is within opening 48.

The sealing element 45 consists of a star-like core 50 having circular recesses, 51, 52, 53 to receive the plastic insulated cables in the area of the refractor sleeves 20. An annular collar 54 is wrapped around core 50 which has a radial extension 55 similar to extension 47. The collar 54 is cut along an arcuate line 56 so that it can be easily wrapped around core 50. It consists of the same material as sealing element 46.

The dimensions of the sealing elements 45, 46 are such that upon a sliding of the rail portions 43, 44 on the longitudinal edges 42a of tubular portion 42 the sealing elements are slightly radially compressed to establish a satisfactory sealing. The sealing elements 45, 46 also serve as spacers to keep the tubular portion 42 at a uniform distance from the cables and the connection area, respectively.

Spacer material in the form of a non-woven material 58 preferably of polypropylene is wrapped around the connection area which serves for the support of envelope 42.

The braids 18a, 18b, and 18c made of the screen of the plastic insulated cables 10a, 10b, and 10c are led outside of the tubular portion 42 and can be electrically connected with the envelope 42 by means of a sheet screw 59. The ends of the braids 18a, 18b, 18c are brought into electrical engagement with the lead sheath 33 by means of a constant force spring 60 so that a short circuit connection is established between the cables 10, 10b, 10c on the one side and the cable 11 on the other side.

The rail portion 44 receives an adapter 61 of plastic material within an opening, and opening of the adapter can be closed by a cap 42. The adapter 51 serves for receiving a pouring spout of a bag for a casting mass indicated at 64. The casting mass is poured into and completely fills out the cavity formed. For this purpose, the rail portions 43, 44 can have a certain distance from each other in order to vent the air and to observe the liquid level in the cavity. After the filling of the cavity, the rail portions 43, 44 are pushed against one another. The opening of the adapter 41 is closed by cap 62. The insulation mass first is liquid, however, solidifies after some time. For this, a suitable casting resin can be used. Thereafter, an outer protective sleeve is laid around the envelope which, however, is not to be described.

In the embodiment described, a plastic insulated cable is connected with an oil paper insulated cable. It is understood that also two oil paper insulated cables or two plastic insulated cables can be interconnected transit sleeve).

As can be seen further, an electrical screening is only given in radial direction through envelope 42 while no metallic material is provided in the axial direction. By the introduction of the outer conducting layers of the cables into tubular portion 42 and the use of field controlling refractor sleeves 20a, 20b, and 20c and by the special shape of the lead sheath 33 a metallic end closure of tubular portion 42 is not necessary.

The cable connection shown can be used for arbitrary cable connections, particularly, however, for electrical cables in the medium voltage range. The installation requires less work load and can be carried out by semi-educated workers. The individual parts used are of less expensive material. Particularly, the installation work requires a relatively small manhole or ditch since a so-called parking position to be attained first by the tubular portion before the electrical connection is established can be omitted.

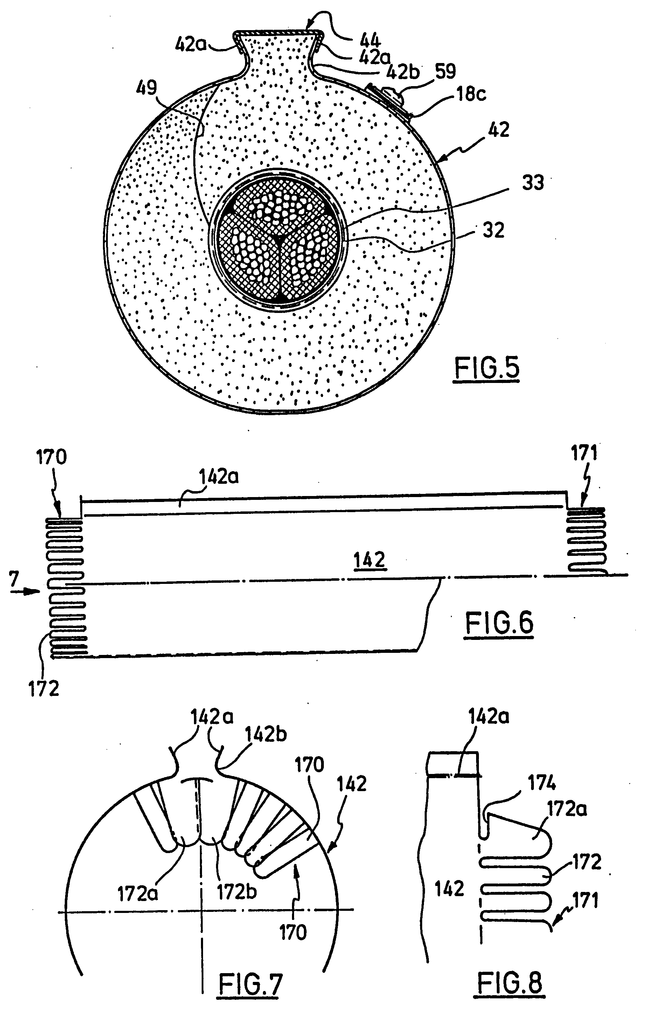

The tubular portion 142 shown in Figure 6 deviates from that of Figure 2 insofar as barbs 170, 171 extend beyond the end of the longitudinal edges 142a, the barbs 170, 171 being formed by axial, circumferentially spaced extensions 172 rounded at the free ends thereof. As can be seen in Figure 7, the extensions 172 are bent radially inwardly after the installation of tubular portion 142 whereby the associated sealing elements 45 or 46, respectively, are axially outwardly limited. The extensions 172 overlap each other at the free ends thereof.

Adjacent to the outwardly bend longitudinal edges 142a extensions 172a, 172b are provided which are broader than the extensions 172. Through a circumferential cut, the area of the extensions 172a, 172b facing the gap between the longitudinal edges 142a is free. The width of the extensions 172a, 172b is such that they also overlap each other after being bend radially inwardly.

The barbs 170, 171 above all are provided to establish earth potential if the cable connection is touched at one end.

As can be seen in Figures 5 and 7, the longitudinal edges 142a are bent radially outwardly such that the gap formed therebetween enlarges radially outwardly. A radius 42b or 142b, respectively, is formed at the bending area.

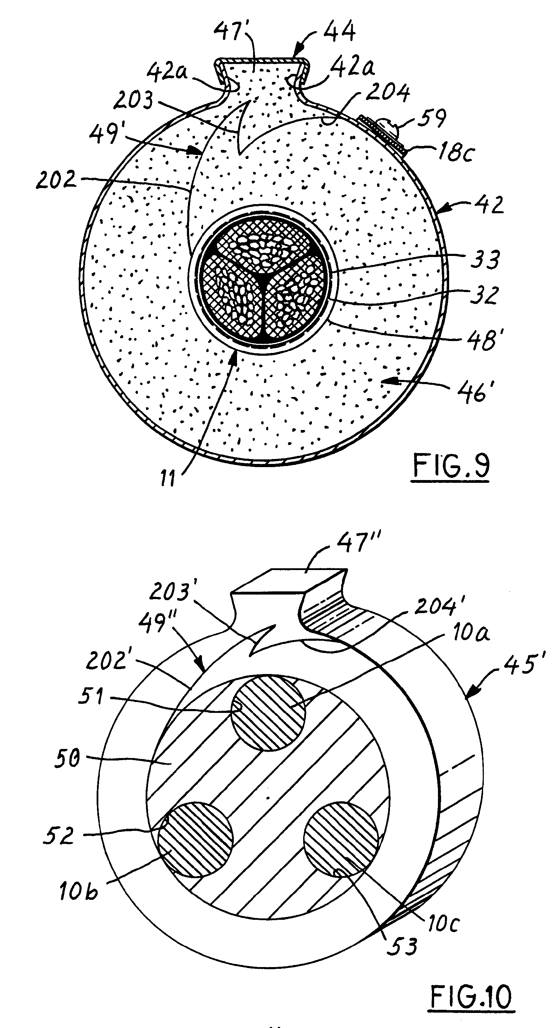

Figures 9 and 10 illustrate alternative embodiments 45′, 46′ of the sealing elements 45, 46 of Figures 3 and 4, respectively. Referring to Figure 9, the sealing element 46′ is approximately cylindrical and consists of a resilient, foamed, closed-cell cellular plastic material. The sealing element 46′ has a radial extension 47′ forming a dove tail in cross section, the cross-sectional contour thereof corresponding to the gap between the outwardly bent edges 42a′ of sleeve 42′. The sealing element 46′ has a central circular opening 48′. It includes further a radial cut along a line 49′. The cut 49′ includes a first portion 202 extending from opening 48′ toward extension 47′ along a curve, the curve leading from the central opening 48′ toward the outer periphery as a spiral. A second relatively short portion 203 having an opposite curvature than portion 202 extending approximately radially backwards toward opening 48′ whereby a relatively small acute angle is formed between portions 202 and 203. A third portion 204 joins to the second or medium portion 203 which extends along a second circular curve or spiral up to the outer periphery and as illustrated to one side of the extension element 47′. The portions 203 and 204 include a small acute angle. Due to the described course of the cut line 49′, the adjacent ends of the portions 202, 203, 204 form a projection and a recess on both opposing end faces of the sealing element, each having a small acute angle, the projections and the recesses being adapted to positively interengage, whereby a locking is achieved automatically retaining the ends of the cut sealing element 46′ together unless it is unfolded by a manual operation. This is for example the case if the collar-like sealing element 46 is to be placed around the sheath 33 of a cable 11 as shown in Figure 9.

For an unfolding and relocking of the ends of the sealing element 46′, the radial extension 47′ can be manually gripped in order to bring the ends out of engagement. After the locking of both sealing elements for a sleeve 42 has taken place, the sleeve can be wrapped around the sealing elements. The sizes of the sealing elements are such that they are somewhat radially compressed as rail 44 is slid along the longitudinal edges 42a of sleeve 42 in order to achieve a satisfactory sealing effect. Furthermore, the sealing element 46 serves as a spacer by which sleeve 42 can be held at a uniform radial distance from the cables or their connection area, respectively.

The reference number 59 designates the aforementioned screw by which a strand 18c forming a cable screen is electrically connected to sleeve 42.

In Figure 10, a sealing element 45′ can be seen which resembles that of Figure 4, with the ends of the element generally corresponding to the ends of element 46′. It is to be seen that the portions 202′ and 203′ of the parting line 49˝ extend farther into the radial extension 47˝ than in the embodiment of Figure 9. The ring-cylindrical sealing element 45′ surrounds a star-like sealing core 50 having circular recesses 51, 52, 53 for the receipt of plastic cables 10a, 10d and 10c which, for example, could be connected with the cores of the oil paper cable 11 of Figure 1. The total connection being surrounded by the tubular portion 42 as illustrated in Figure 9, including end sealing element 45′ and the sealing core 50 as well as sealing extension 47˝ in the area of the gap, to seal the plastic cable while the oil paper cable connected thereto is being sealed against the sleeve by sealing element 46′.

## Claims

1. An electrical cable connection including cables having conductors connected in a connection area and a cable sheath including an outer conducting layer, comprising an inner enclosure including a tubular portion (42) surrounding the connection area and having a larger diameter than the cables, the tubular portion being parted in longitudinal direction and defining a pair of spaced longitudinal edges (42a), cover means (43, 44) cooperating with said longitudinal edges (42a) to cover and seal the space formed by said longitudinal edges (42a) and annular sealing elements of non-metallic resilient material located between the ends of said tubular portion and the associated cables, said sealing elements holding said tubular portion at a uniform radial distance from said connection area and defining a sealed cavity with said tubular portion for receiving liquid insulation mass, characterized in that said tubular portion (42) and said cover means (42, 44) are of metallic material, said cover means (42, 44) bias said longitudinal edges (42a) toward each other, and the outer conducting layer of said cables extends through said associated sealing elements (45, 46) into said tubular portion and being electrically connected to said tubular portion through an electrically conducting connection means.

2. The cable connection according to claim 1, wherein the longitudinal edges (42a) of said tubular portion (42) are bent outwardly, and said cover means include a rail (43, 44) approximately C-shaped or U-shaped in cross section which is slid over both bent longitudinal edges (42a), the legs of said rail (43, 44) engaging behind said longitudinal edges (42a).

3. The cable connection according to claim 2, wherein the rail (43, 44) and the outwardly bent longitudinal edges (42a) form a dove-tail connection.

4. The cable connnection according to claim 2 or 3, wherein the rail is divided into a plurality of separate portions.

5. The cable connection according to one of the claims 1 to 4, wherein the sealing elements (45, 46) consist of closed cellular foamed plastic material.

6. The cable connection according to claim 2 or 3, wherein the sealing elements (45, 46) have a radial portion (47, 55) extending into the gap between the outwardly bent longitudinal edges (42a).

7. The cable connection according to claim 6, wherein the radial portion (47, 55) is adapted to the cross-section configuration in the gap between the longitudinal edges (42a).

8. The cable connection according to one of the claims 1 to 7, wherein the annular sealing elements (45, 46) are split and collapsible.

9. The cable connection according to claim 8, wherein the sealing elements (45) are comprised of an inner core (50) having one or a plurality of circular recesses (51, 52, 53) to receive cables, and of an annular split collar (54) adapted to be wrapped around the core.

10. The cable connection according to one of the claims 1 to 9, wherein said cables (10, 10a, 10c) are insulated by plastic material, a field controlling conical sleeve (20, 20a, 20b, 20c) of semi-conductive resilient material is pushed onto the exposed portion of the outer conducting layer (15) of said cables (10, 10a, 10c), the end of said sleeve having a greater diameter engaging the screen (16, 16a, 16b, 16c) and the end having the smaller diameter engaging the plastic insulation (14, 14a, 14b, 14c).

11. The cable connection according to one of the claims 1 to 10, wherein said cables (10, 10a, 10b, 10c or 11) are insulated by plastic material and the outer conducting layers (15, 15a, 15b or 33) of plastic insulated cables (10, 10a, 10b, 10c or 11) are electrically interconnected by a braid (18, 18a, 18b, 18c) which is brought into engagement with the associated conducting layer by suitable clamping means (19, 19a, 19b, 19c or 60).

12. The cable connection according to claim 11, wherein the braid (18, 18a, 18b, 18c) is made of the screen of the plastic insulated cable (10, 10a, 10b, 10c) which is shortened about the necessary length.

13. The cable connection according to one of the claims 1 to 12, wherein one of said cables is a paper insulated cable (11), with the lead sheath (33) thereof expanded at the free end thereof.

14. The cable connection according to claims 11 or 12, wherein the tubular portion (42) includes at least one bore for the receipt of a sheet screw (49) by which the braids (18, 18a, 18b, 18c) are electrically connected to said tubular portion (42).

15. The cable connection according to one of the claims 1 to 14, wherein the cover means (44) include a closable pouring opening (61) for a liquid insulation mass.

16. The cable connection according to one of the claims 1 to 15, wherein said connection is between a three conductor cable and three individual cables and a spacer element (41) of electrically insulating material is placed between the individual cables or the conductors, respectively.

17. The cable connection according to one of the claims 1 to 16, wherein a spacer wrapper (58) of relatively stiff non-woven material or a grid or net like web of resilient plastic material is placed within said tubular portion (42).

18. The cable connection according to one of the claims 1 to 17, wherein barbs (170, 171) are provided at the ends of said tubular portion (142) formed by a plurality of circumferentially spaced extensions (172, 172a, 172b) which are bent radially inwardly after the placement of the tubular portion on the connection area, the extensions axially limiting the associated sealing element (45, 46).

19. The cable connection according to claim 18, wherein the extensions (172a, 172b) of the barbs (170, 171) adjacent to the outwardly bent longitudinal edges (142a) of said tubular portion (142) have a larger width than the remaining extensions (172) such that they are also overlapping each other after being bent radially inwardly.

## Patentansprüche

1. Elektrische Kabelverbindung für Kabel, die in einem Verbindungsbereich verbundene Leiter und einen Kabelmantel mit einer äußeren leitfähigen Schicht aufweisen, mit einer inneren Umhüllung, die einen rohrförmigen, den Verbindungsbereich umgebenden Abschnitt (42) aufweist, der einen größeren Durchmesser als die Kabel hat, wobei der rohrförmige Abschnitt in Längsrichtung geteilt ist und zwei voneinander beabstandete Längskanten (42a) bildet, ferner mit einem Verschluß (43, 44), der mit den Längskanten (42a) zusammenwirkt zwecks Abdeckung und Abdichtung des Zwischenraums zwischen den Längskanten (42a) und mit ringförmigen Dichtelementen aus nicht metallischem nachgebendem Material zwischen den Enden des rohrförmigen Abschnitts und den zugeordneten Kabeln, wobei die Dichtelemente den rohrförmigen Abschnitt in gleichmäßig radialem Abstand vom Verbindungsbereich halten und einen abgedichteten Hohlraum mit dem rohrförmigen Abschnitt bilden zur Aufnahme von flüssiger Isoliermasse, dadurch gekennzeichnet, daß der rohrförmige Abschnitt (42) und der Verschluß (42, 44) aus metallischem Material bestehen, wobei der Verschluß (42, 44) die Längskanten (42a) aufeinander zu vorspannt und die äußere leitfähige Schicht der Kabel durch die zugeordneten Dichtelemente (45, 46) hindurch in den rohrförmigen Abschnitt hineinerstreckt und elektrisch mit dem rohrförmigen Abschnitt durch elektrisch leitende Verbindungsmittel verbunden sind.

2. Kabelverbindung nach Anspruch 1, dadurch gekennzeichnet, daß die Längskanten (42a) der Hülle (42) nach außen umgebogen sind und eine im Querschnitt annähernd C-förmige oder U-förmige Schiene (43, 44) in Längsrichtung über beide gebogenen Längskanten (42a) geschoben wird, wobei die Schenkel der Schiene (43, 44) die Längskanten 42a) hintergreifen.

3. Kabelverbindung nach Anspruch 2, dadurch gekennzeichnet, daß die Schiene (43, 44) und die umgebogenen Längskanten (42a) eine Schwalbenschwanzverbindung bilden.

4. Kabelverbindung nach Anspruch 2 oder 3, dadurch gekennzeichnet, daß die Schiene in mehrere getrennte Abschnitte unterteilt ist.

5. Kabelverbindung nach einem der Ansprüche 1 bis 4, dadurch gekennzeichnet, daß die Abdichtelemente (45, 46) aus geschäumtem, geschlossenzelligem Kunststoffmaterial bestehen.

6. Kabelverbindung nach Anspruch 1 und 2 oder 3, dadurch gekennzeichnet, daß die Abdichtelemente (45, 46) einen radialen Abschnitt (47, 55) auweisen, der in den Spalt zwischen den umgebogenen Längskanten (42a) hineinsteht.

7. Kabelverbindung nach Anspruch 6, dadurch gekennzeichnet, daß der radiale Abschnitt (47, 55) an die Querschnittskonfiguration im Spalt zwischen den Längskanten (42a) angepaßt ist.

8. Kabelverbindung nach einem der Ansprüche 1 bis 7, dadurch gekennzeichnet, daß die ringförmigen Abdichtelemente (45, 46) geteilt und aufklappbar ausgebildet sind.

9. Kabelverbindung nach Anspruch 8, dadurch gekennzeichnet, daß Abdichtelemente (45) einen inneren Kern (50) mit einer oder mehreren kreisförmigen Ausnehmungen (51, 52, 53) zur Aufnahme von Kabeln und eine um den Kern herumwickelbaren ringförmigen geteilten Manschette (54) aufweisen.

10. Kabelverbindung nach einem der Ansprüche 1 bis 9, dadurch gekennzeichnet, daß die Kabel (10, 10a, 10b, 10c) mit Kunststoff isoliert sind, eine feldsteuernde konische Hülse (20, 20a, 20b, 20c) aus halbleitendem nachgiebigem Material auf den freigelegteen Aschnitt der äußeren Leiterschicht (14, 14a, 14b, 14c) geschoben ist, wobei das im Durchmesser größere Ende mit der freigelegten Abschirmung (16, 16a, 16b, 16c) und das im Durchmesser kleinere Ende mit der Kunststoffisolierung (14, 14a, 14b, 14c) in Eingriff ist.

11. Kabelverbindung nach einem der Ansprüche 1 bis 10, dadurch gekennzeichnet, daß die Kabel (10, 10a, 10b, 10c oder 11) mit Kunststoffmaterial isoliert sind und die äußeren leitfähigen Schichten (15, 15a, 15b oder 33) der kunststoffisolierten Kabel (10, 10a, 10b, 10c oder 11) mit einer Litze (18, 18a, 18b, 18c) elektrisch verbunden sind, die durch geeignete Klemmittel (19, 19a, 19b, 19c oder 60) mit der zugehörigen Leitschicht in Eingriff gebracht ist.

12. Kabelverbindung nach Anspruch 11, dadurch gekennzeichnet, daß die Litze (18, 18a, 18b, 18c) aus dem Draht (16) der Abschirmung des Kunststoffkabels (10, 10a, 10b, 10c) geformt ist, das um die erforderliche Länge gekürzt ist.

13. Kabelverbindung nach einem der Ansprüche 1 bis 12, dadurch gekennzeichnet, daß die Kabel Masse-Kabel sind und der Bleimantel (33) am freien Ende aufgeweitet ist.

14. Kabelverbindung nach Anspruch 12 oder 13, dadurch gekennzeichnet, daß der rohrförmige Abschnitt (42) mindestens eine Bohrung aufweist zur Aufnahme einer Blechschraube (49), durch welche die Litzen (18, 18a, 18b, 18c) elektrisch mit dem rohrförmigen Abschnitt (42) verbunden sind.

15. Kabelverbindung nach einem der Ansprüche 1 bis 14, dadurch gekennzeichnet, daß der Verschluß (44) eine verschließbare Einfüllöffnung (61) für die flüssige Isoliermasse aufweist.

16. Kabelverbindung nach einem der Ansprüche 1 bis 15, dadurch gekennzeichnet, daß die Verbindung zwischen einem Dreileiterkabel und drei einzelnen Kabeln hergestellt ist und ein Abstandselement (41) aus elektrisch isolierendem Material zwischen den einzelnen Kabeln oder Leitern angeordnet ist.

17. Kabelverbindung nach einem der Ansprüche 1 bis 16, dadurch gekennzeichnet, daß innerhalb des rohrförmigen Abschnitts (42) eine Abstandsumhüllung (58), vorzugsweise aus einem relativ steifen Vliesmaterial oder einem gitterartigen Gewebe aus elastischem Kunststoff, angeordnet ist.

18. Kabelverbindung nach einem der Ansprüche 1 bis 17, dadurch gekennzeichnet, daß die Hülle (142) an den Enden eine durch eine Reihe von in Umfangsrichtung beabstandeten Ansätzen (172, 172a, 172b) gebildete Fiederung (170, 171) aufweist, die nach dem Aufbringen des rohrförmigen Abschnitts (142) auf den Verbindungsbereich radial nach innen gebogen wird und das zugeordnete Abdichtelement (45, 46) axial nach außen begrenzt.

19. Kabelverbindung nach Anspruch 18, dadurch gekennzeichnet, daß die Ansätze (172a, 172b) der Fiederung (170, 171), die den umgebogenen Längskanten (142a) der Hülle (142) benachbart sind, eine größere Breite aufweisen als die anderen Ansätze (172) derart, daß sie sich bei dem Biegen radial nach innen einander ebenfalls überlappen.

## Revendications

1. Une connexion pour câbles électriques, comportant des câbles ayant des conducteurs connectés dans une zone de connexion et une gaine de câble pourvue d'une couche conductrice externe, comportant une enveloppe interne pourvue d'une partie tubulaire (42) entourant la zone de connexion et ayant un diamètre plus large que les câbles, cette partie tubulaire étant ouverte selon la direction longitudinale et présentant une paire d'arêtes longitudinales espacées(42a), des moyens de recouvrement (43, 44) coopérant avec lesdites arêtes longitudinales (42a) afin de recouvrir et de fermer de façon étanche l'espace formé par lesdites arêtes longitudinales (42a), et des éléments annulaires d'étanchéité en un matériau élastique non-métallique, disposé entre les extrémités de ladite partie tubulaire et les câbles associés, lesdits éléments d'étanchéité maintenant ladite partie tubulaire à une distance radiale uniforme de ladite zone de connexion et définissant avec ladite portion tubulaire un logement étanche destiné à recevoir une masse de liquide d'isolation,
caractérisé en ce que ladite partie tubulaire (42) et lesdits moyens de recouvrement (43, 44) sont en un matériau métallique, lesdits moyens de recouvrement (43, 44) sollicitent les deux arêtes longitudinales (42a) l'une vers l'autre, tandis que la couche conductrice externe desdits câbles se prolonge à travers lesdits éléments d'étanchéité associés (45, 46) dans ladite partie tubulaire et est électriquement connectée à ladite partie tubulaire par l'intermédiaire d'un moyen de connexion électriquement conducteur.

2. La connexion pour câble selon la revendication 1, dans laquelle les arêtes longitudinales (42a) de ladite partie tubulaire (42) sont courbées vers l'extérieur, et lesdits moyens de recouvrement comportent un rail (43, 44) approximativement en forme de C ou en forme de U en coupe transversale, qui est engagé à glissement sur les bords longitudinaux recourbés (42a), les ailes dudit rail (43, 44) venant en engagement derrière lesdits bords longitudinaux (42a).

3. La connexion pour câble selon la revendication 2, dans laquelle le rail (43, 44) et les bords longitudinaux courbés vers l'extérieur (42a) forment une liaison en queue d'aronde.

4. La connexion pour câble selon la revendication 2 ou 3, dans laquelle le rail est divisé en une pluralité de parties séparées.

5. La connexion pour câble selon l'une des revendications 1 à 4, dans laquelle des éléments d'étanchéité (45, 46) sont constitués d'une matière plastique expansée à cellules fermées.

6. La connexion pour câble selon la revendication 2 ou 3, dans laquelle les éléments d'étanchéité (45, 46) ont une partie radiale (47, 55) se prolongeant dans l'intervalle entre les arêtes longitudinales (42a), courbées vers l'extérieur.

7. La connexion radiale selon la revendication 6, dans laquelle la partie radiale (47, 55) est adaptée à la configuration en coupe transversale de l'intervalle entre les arêtes longitudinales (42a).

8. La connexion pour câble selon l'une des revendications 1 à 7, dans laquelle les éléments annulaires d'étanchéité (45, 46) sont fendus et susceptibles d'être écrasés.

9. La connexion pour câble selon la revendication 8, dans laquelle les éléments d'étanchéité (45) sont constitués d'un noyau interne (50) présentant un ou plusieurs logements circulaires (51, 52, 53) destinés à recevoir les câbles, et d'un collier fendu annulaire (54) adapté à envelopper le noyau.

10. La connexion pour câble selon l'une des revendications 1 à 9, dans laquelle lesdits câbles (10, 10a, 10c) sont isolés par une matière plastique, un manchon conique de contrôle de champ (20, 20a, 20b, 20c) en un matériau élastique semi-conducteur est poussé sur la partie dénudée de la couche conductrice externe (15) desdits câbles (10, 10a, 10c), l'extrémité dudit manchon présentant le diamètre le plus important en s'engageant avec un blindage (16, 16a, 16b, 16c) ou un écran tandis que l'extrémité de diamètre plus petit vient s'engager avec une isolation plastique (14, 14a, 14b, 14c) des câbles.

11. La connexion pour câble selon l'une des revendications 1 à 10, dans laquelle lesdits câbles (10, 10a, 10b, 10c ou 11) sont isolés par une matière plastique tandis que les couches conductrices externes (15, 15a, 15b ou 33) des câbles à isolation plastique (10, 10a, 10b, 10c ou 11) sont interconnectés électriquement par une tresse (18, 18a, 18b, 18c) qui est amenée en engagement avec la couche conductrice associée par des moyens de serrage appropriés (19, 19a, 19b, 19c ou 60).

12. La connexion pour câble selon la revendication 1, dans laquelle la tresse (18, 18a, 18b, 18c) est réalisée à partir du blindage du câble isolé en matière plastique (10, 10a, 10b, 10c) qui est raccourci sur la longueur nécessaire.

13. La connexion pour câble selon l'une des revendications 1 à 12, dans laquelle un desdits câbles est un câble à isolation de papier (11), une gaine conductrice (33) de celui-ci s'élargissant à l'extrémité libre de ce dernier.

14. La connexion pour câble selon l'une des revendications 11 ou 12, dans laquelle la partie tubulaire (42) comporte au moins un alésage pour la réception d'une vis pour tôle (59) par laquelle les tresses (18, 18a, 18b, 18c) sont électriquement connectées à ladite partie tubulaire (42).

15. La connexion pour câble selon l'une des revendications 1 à 14, dans laquelle le moyen de recouvrement (44) comporte une ouverture de versage (61), susceptible d'être obturée, destinée à une masse liquide d'isolation.

16. La connexion pour câble selon l'une des revendications 1 à 15, dans laquelle ladite connexion se situe entre un câble à trois conducteurs et trois câbles individuels et un élément d'entretoisement (41) en un matériau électriquement isolant est disposé entre les câbles individuels ou les conducteurs, respectivement.

17. La connexion pour câble selon l'une des revendications 1 à 16, dans laquelle une enveloppe d'entretoisement (58) en un matériau non tissé, relativement raide, ou bien un tissu en forme de grille ou de résille en un matériau plastique élastique est disposée à l'intérieur de ladite partie tubulaire (42).

18. La connexion de câble selon l'une des revendications 1 à 17, dans laquelle des picots (170, 171) sont prévus aux extrémités de ladite partie tubulaire (142) sont formés par une pluralité de prolongements (172, 172a, 172b), espacés circonférentiellement, qui sont pliés radialement vers l'intérieur après la mise en place de la partie tubulaire sur la zone de connexion, les prolongements limitant axialement l'élément d'étanchéité associé (45, 46).

19. La connexion de câble selon la revendication 18, dans laquelle les prolongements (172a, 172b) des picots (170, 171) adjacents aux arêtes longitudinales (142a) courbées vers l'extérieur de ladite partie tubulaire (142) ont une largeur plus grande que les prolongements restants (172) de sorte qu'ils se recouvrent aussi l'un l'autre après avoir été pliées radialement vers l'intérieur.
